(19) Europäisches Patentamt
European Patent Office
Office européen des brevets

(11) Veröffentlichungsnummer: **0 029 950**
**B1**

(12) # EUROPÄISCHE PATENTSCHRIFT

(45) Veröffentlichungstag der Patentschrift: **13.04.83**

(51) Int. Cl.³: **C 09 B 43/10** // D21H1/46, D06P3/32

(21) Anmeldenummer: **80107099.6**

(22) Anmeldetag: **15.11.80**

(54) **Trisazofarbstoffe, Verfahren zu ihrer Herstellung und ihre Verwendung zum Färben von vegetabilischen Fasermaterialien und Leder.**

(30) Priorität: **29.11.79 DE 2948022**

(43) Veröffentlichungstag der Anmeldung: **10.06.81 Patentblatt 81/23**

(45) Bekanntmachung des Hinweises auf die Patenterteilung: **13.04.83 Patentblatt 83/15**

(84) Benannte Vertragsstaaten: **CH DE FR GB IT LI**

(56) Entgegenhaltungen:
**keine**
**CH-A-400 417**
**FR-A-2 332 310**
**US-A-3 211 556**

***Die Akte enthält technische Angaben, die nach dem Eingang der Anmeldung eingereicht wurden und die nicht in dieser Patentschrift enthalten sind.***

(73) Patentinhaber: **BAYER AG, Zentralbereich Patente, Marken und Lizenzen, D-5090 Leverkusen 1, Bayerwerk (DE)**

(72) Erfinder: **Nickel, Horst, Dr., Fontanestrasse 23, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 029 950 B1

BUNDESDRUCKEREI BERLIN

# Trisazofarbstoffe, Verfahren zu ihrer Herstellung und ihre Verwendung zum Färben von vegetabilischen Fasermaterialien und Leder

Gegenstand der vorliegenden Erfindung sind Farbstoffe der allgemeinen Formel

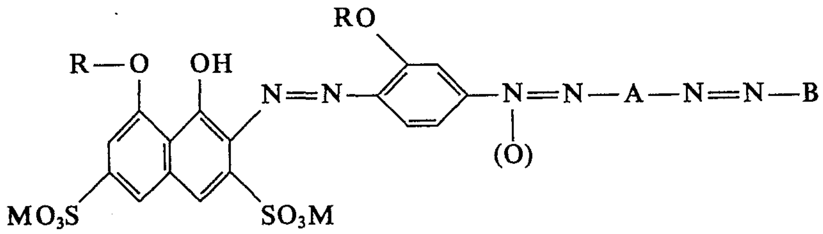

(I)

worin

R gegebenenfalls substituiertes $C_1-C_4$-Alkyl,

M Wasserstoff, ein Alkalimetall-Kation oder $HN(R_1)_3$-Kation; $R_1$ = H oder gegebenenfalls substituiertes $C_1-C_4$-Alkyl,

A und B einen gegebenenfalls substituierten Rest der Benzol- oder Naphthalinreihe bedeuten, sowie deren Herstellung und Verwendung und deren konzentriert Lösungen.

Ein geeigneter Substituent in den Alkylresten R und $R_1$ ist beispielsweise Hydroxy.

Geeignete Reste A sind beispielsweise $C_1-C_4$-Alkoxyphenylen, (1,4), Phenylen(1,4), 2-Chlor- oder Cyan-phenylen(1,4).

Geeignete Substituenten in den Resten A und B sind insbesondere Sulfogruppen.

Geeignete Reste B sind beispielsweise gegebenenfalls weitersubstituierte Hydroxy-naphthylsulfonsäure, Hydroxybenzol- oder Aminonaphthylsulfonsäurereste.

Hervorzuheben sind Farbstoffe der Formel

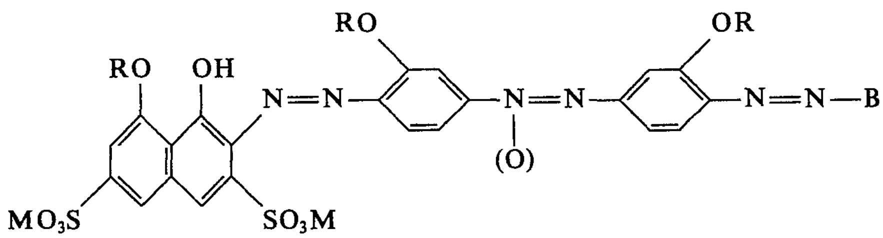

(II)

insbesonders solche mit B = Rest der Sulfonaphthalinreihe sowie solche der Formel

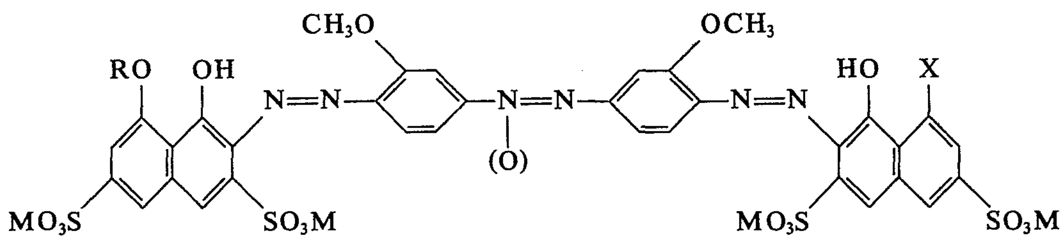

(III)

worin

X = Substituent insbesondere $C_1-C_4$-Alkoxy, Hydroxy, Amino, Acylamino.

Bevorzugtes Acyl ist dabei $C_1-C_4$-Alkylcarbonyl oder -sulfonyl und gegebenenfalls substituiertes Phenylcarbonyl bzw. -sulfonyl wie Acetyl, Benzoyl, Benzolsulfonyl, Toluolsulfonyl.

Die Farbstoffe werden beispielsweise hergestellt, indem man Nitroazoverbindungen der Formel

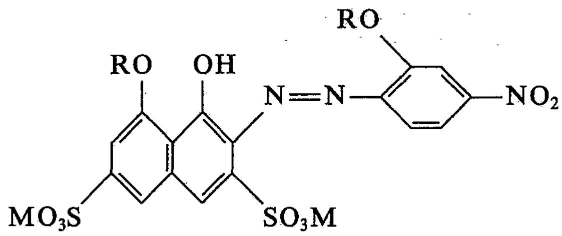

(IV)

mit Nitroazoverbindungen der Formel

$$O_2N-A-N=N-B \qquad (V)$$

in bekannter Weise zusammenreduziert, wie es beispielsweise im Houben-Weyl, Band X/3, Seite 346–349, Verlag Georg Thieme Stuttgart (1965), beschrieben ist.

Die Zusammenreduktion verschiedener Nitroazoverbindungen IV und V führt naturgemäß zu Farbstoff-Gemischen, deren Zusammensetzung variiert werden kann durch den Mengen-Einsatz (Mol : Mol bzw. andere Molverhältnisse 1 Mol IV bis 0,5 Mol V), um zu dem gewünschten Farbstoffpräparat zu gelangen, wobei vorwiegend der Farbton, die Löslichkeitsverhältnisse und sonstige coloristischen Eigenschaften (Echtheiten) von technischer Bedeutung sind. Man erhält im allgemeinen ein Azo-Azoxy-Farbstoffgemisch, dessen Zusammensetzung durch die Bedingungen der Zusammenreduktion verändert werden kann.

Die Nitroazoverbindungen IV erhält man durch Kuppeln der diazotierten 5-Nitro-2-amino-alkoxybenzole

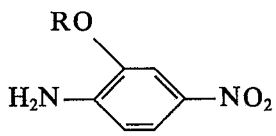

(VI)

mit 1-Hydroxy-8-alkoxynaphthalin-3,6-disulfonsäuren

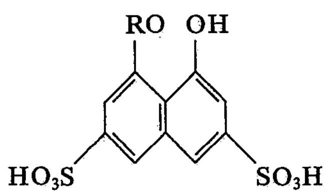

(VII)

in üblicher Weise vorzugsweise im alkalischen Medium unter Verwendung von Na-, K-, Li- oder Ammoniumbasen.

Die Nitroazoverbindungen V werden in üblicher Weise durch Kuppeln von diazotiertem Nitro-Aminen z. B. VI mit Kupplungskomponenten B-H, insbesondere solchen der Hydroxynaphthalin-Reihe, erhalten.

Die Herstellung konzentrierter Farbstoff-Lösungen erfolgt in bekannter Weise beispielsweise durch Auflösen der Farbstoffsäure bzw. eines geeigneten (Alkali- bzw. Ammonium-)Salzes im gewünschten Lösungsmittel vorzugsweise Wasser oder Gemischen aus Wasser und wassermischbaren Lösungsmitteln insbesondere Alkoholen, deren Ether und Ester sowie Amide oder durch Zusammenreduktion der Nitroazoverbindungen direkt zur Lösung.

Die Farbstoffe eignen sich zum Färben von vegetabilischen Fasern und Leder nach den verschiedensten Färbetechniken. Sie eignen sich besonders zum Färben von Cellulose-Materialien vorzugsweise Baumwolle und Papier (geleimt und ungeleimt).

Die Farbstoffe werden sowohl als Pulver bzw. Granulat-Präparationen als auch in Form von konzentrierten Lösungen zum Einsatz gebracht.

Die Farbstoffe besitzen ein gutes Ziehvermögen und gute Allgemein-Echtheiten. Hervorzuheben ist die Brillanz der Färbungen. Papierfärbungen zeichnen sich durch gute Alaun-, Säure-, Alkali-Echtheit aus.

## Beispiel

16,8 g (0,1 Mol) 2-Amino-5-nitro-anisol werden in 300 ml Wasser mit 28 ml 28%iger Salzsäure verrührt und bei 15° C mit 23,5 ml 30%iger Natriumnitritlösung in üblicher Weise diazotiert.

34,8 g (0,1 Mol) 1-Hydroxy-8-ethoxy-naphthalin-3.6-disulfonsäure werden in 200 ml Wasser neutral gelöst und mit 130 ml 20%iger Natriumcarbonatlösung versetzt. Zu dieser Lösung der

Kupplungskomponente läuft in ca. 10 Minuten die obige Lösung des Diazoniumsalzes des Nitro-amino-anisol. Die Schaumentwicklung wird durch Zugabe von etwas Entschäumer gebremst. Nach beendeter Kupplung (ca. 30 Minuten) wird die rote Kupplungslösung mit 80 ml 40%iger Natronlauge versetzt und auf 70° erwärmt. Man gibt nun die Lösung von 13,8 g Glucose in 40 ml heißem Wasser zu, wobei die Temperatur etwas ansteigt, und rührt 30 Minuten. Nach beendeter Zusammenreduktion wird mit ca. 90 ml 28%iger Salzsäure neutralisiert und mit 200 g Natriumchlorid ausgesalzen. Der ausgefallene Farbstoff wird isoliert und getrocknet; pulverisiert stellt er ein dunkles Pulver dar, das sich in Wasser mit blauer Farbe löst. Der Farbstoff färbt Baumwolle in klaren rotstichig blauen Farbton. Papier wird ebenfalls in rotstichig blauen Ton gefärbt.

Verwendet man 0,05 Mol der obigen Nitroazoverbindung

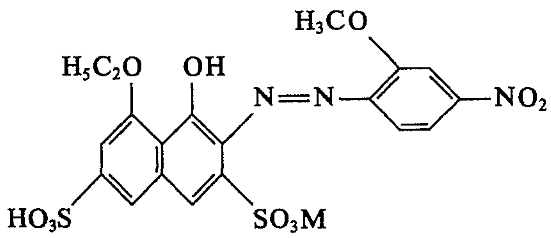

(IV)

und 0,05 Mol der in der Tabelle angegebenen zweiten Nitroazokomponente, so erhält man nach Zusammenreduktion analog dem oben beschriebenen Verfahren Farbstoffe des in der letzten Spalte angegebenen Farbtons.

| 2. Nitroazokomponente | Farbton |
|---|---|
| 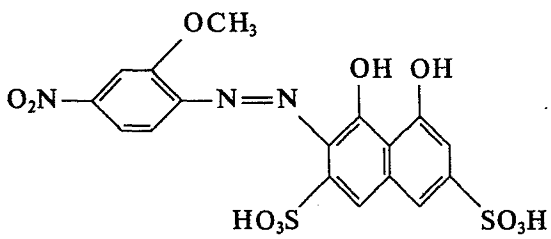 | Blau |
| 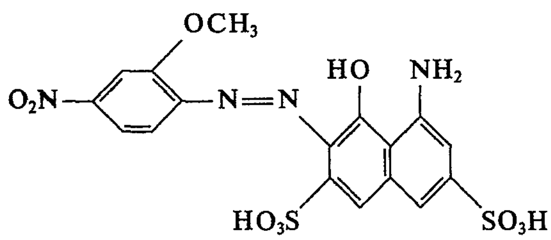 | Blau |
| 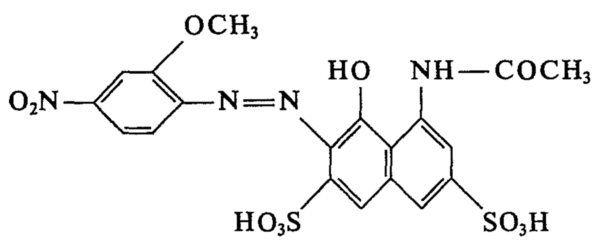 | Blau |
| 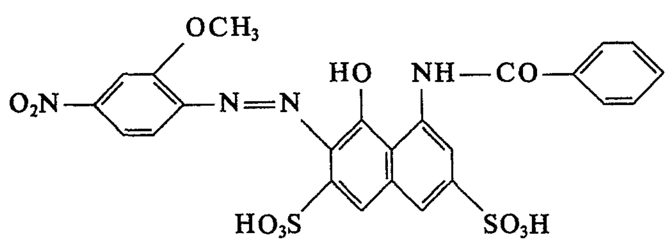 | Blau |

Fortsetzung

| 2. Nitroazokomponente | Farbton |
|---|---|
| 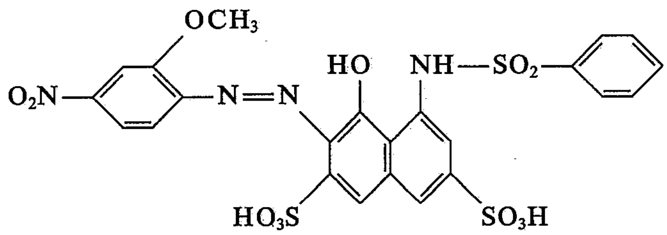 | Blau |
| 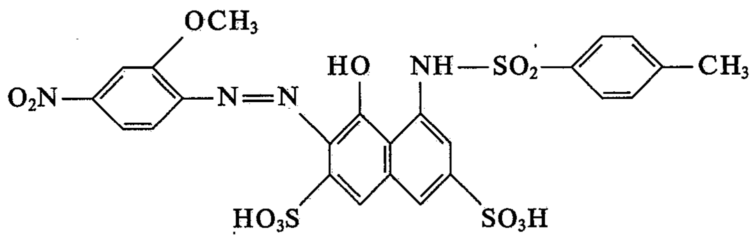 | Blau |
| 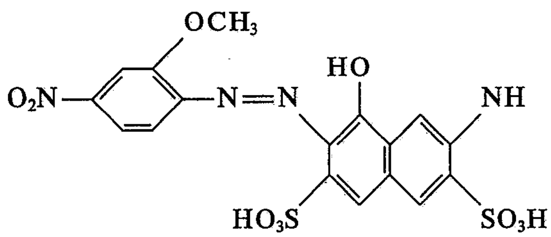 | rotst. Blau |
| 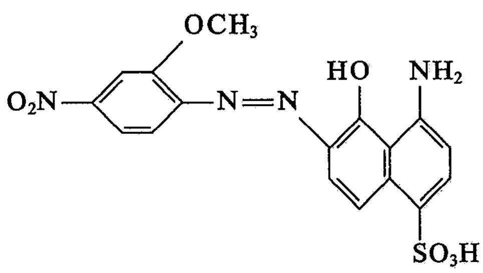 | Blau |
| 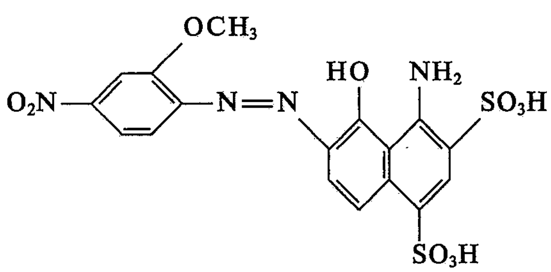 | Blau |
| desgl. | (0,04 Mol) Blau |
| 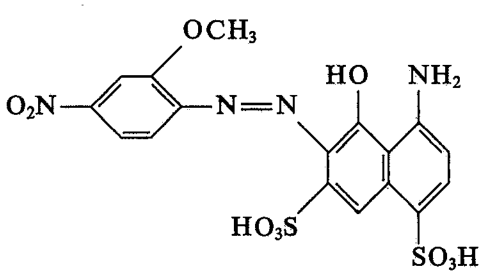 | Blau |

Fortsetzung

| 2. Nitroazokomponente | Farbton |
|---|---|
| 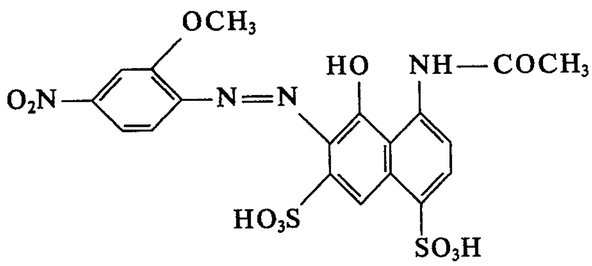 | Blau |
| 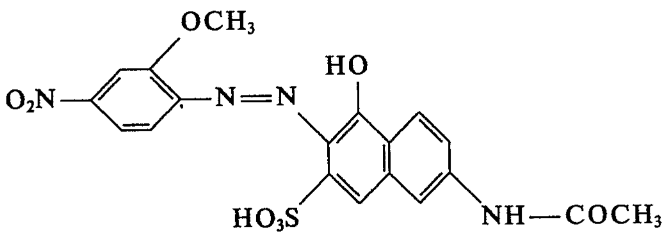 | rotst. Blau |
| 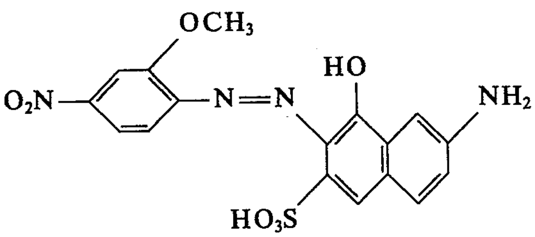 | rotst. Blau |
| 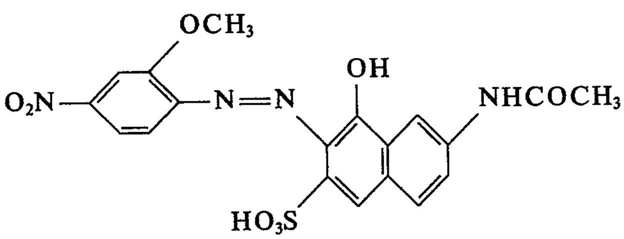 | rotst. Blau |
| 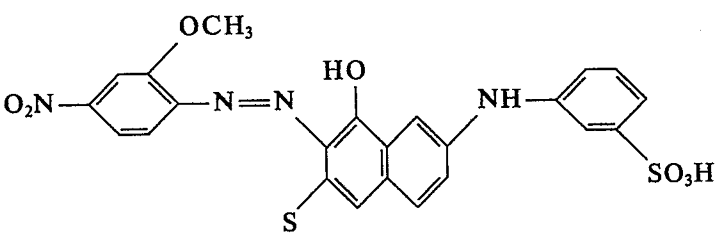 | Blau |
| 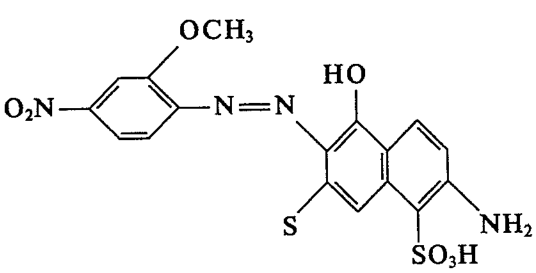 | rotst. Blau |

Fortsetzung

| 2. Nitroazokomponente | Farbton |
|---|---|
| 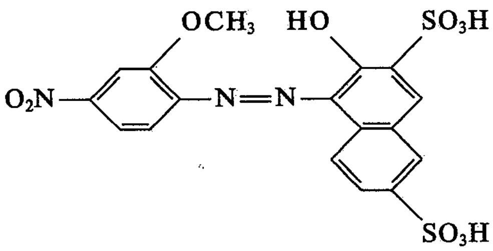 | Violett |
| 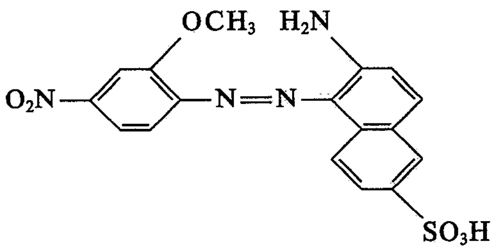 | Violett |
| 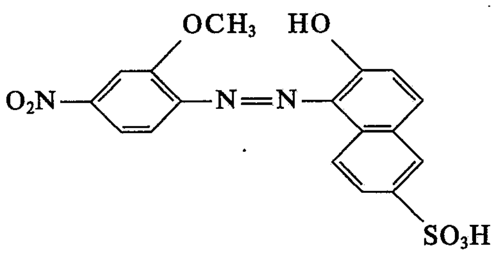 | Violett |
| 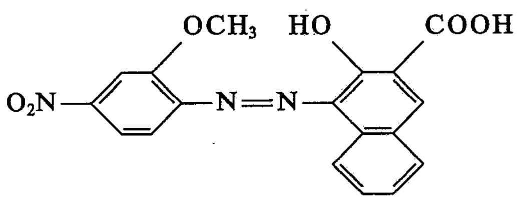 | Violett |
| 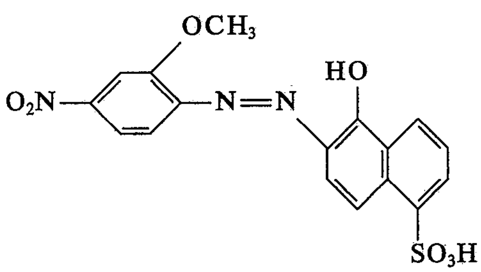 | Violett |
| 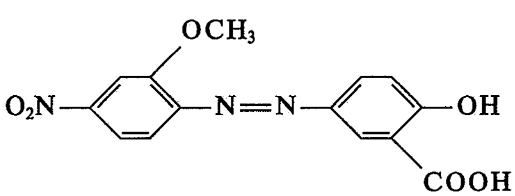 | Blaugrau |
| 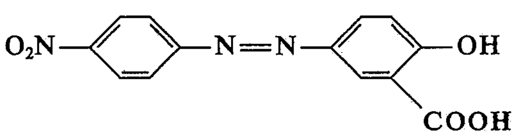 | Blaugrau |

Fortsetzung

| 2. Nitroazokomponente | Farbton |
|---|---|
| 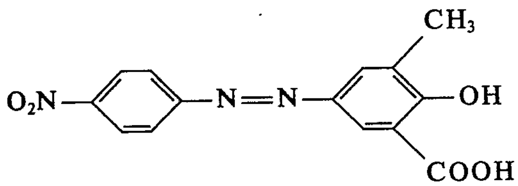 | Blaugrau |
| 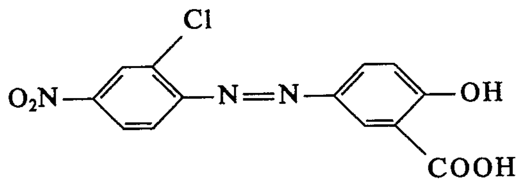 | Blaugrau |
| 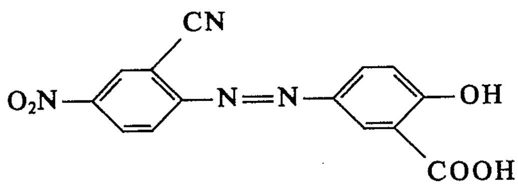 | Blaugrau |
| 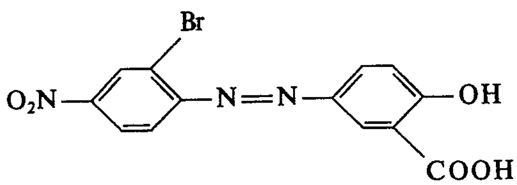 | Blaugrau |
| 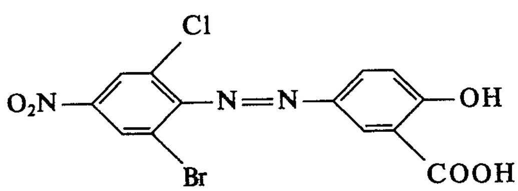 | Blaugrau |
| 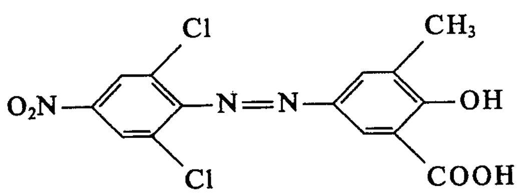 | Blaugrau |
| 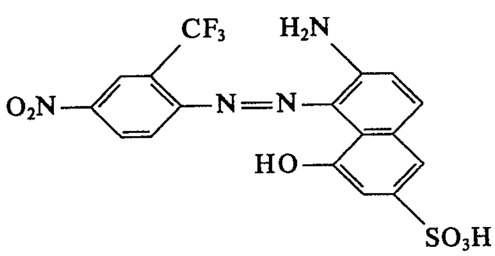 | Violett |

Fortsetzung

| 2. Nitroazokomponente | Farbton |
| --- | --- |
| 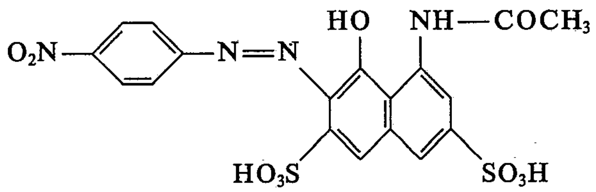 | Violett |
| 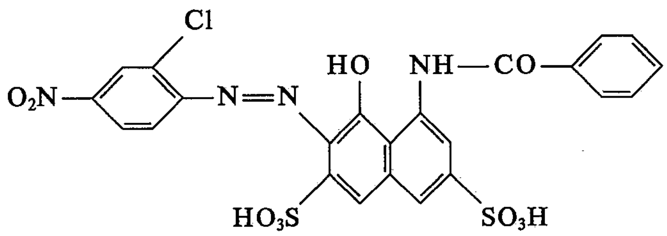 | Violett |
| 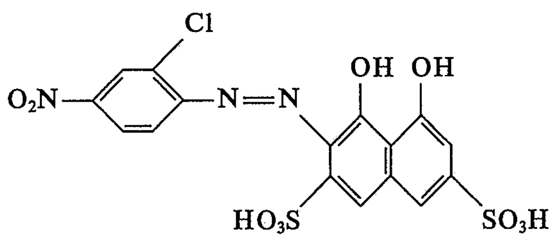 | rotst. Blau |

Zur Herstellung einer Farbstoff-Lösung werden 0,1 Mol 2-Amino-5-Nitroanisol wie oben beschrieben diazotiert und mit 0,1 Mol 1-Hydroxy-8-ethoxy-naphthalin-3.6-disulfonsäure gekuppelt.

Man isoliert den Monoazofarbstoff durch Aussalzen mit Natriumchlorid. Die erhaltene Farbstoff-Paste wird in eine etwa 90° warme Lösung von 175 ml Wasser und 55 g Harnstoff eingetragen und verrührt. Bei 65° werden 17,5 g Glucose zugegeben und anschließend 35 ml 40%ige Natronlauge: Exotherme Reaktion (Temperaturanstieg bis ca. 75°). Der Farbton schlägt dann von Rot nach Blau um. Man rührt noch ca. eine halbe Stunde und klärt dann die entstandene Lösung gegebenenfalls unter Zusatz von etwas Filterhilfsmittel (z. B. DK-Perl®). Die Lösung wird mit Wasser auf die erforderliche Farbstärke eingestellt. Sie stellt eine kältestabile Farblösung dar, die bevorzugt zur Papierfärbung (in blauen Tönen) eingesetzt wird.

**Patentansprüche**

1. Trisazofarbstoffe der Formel

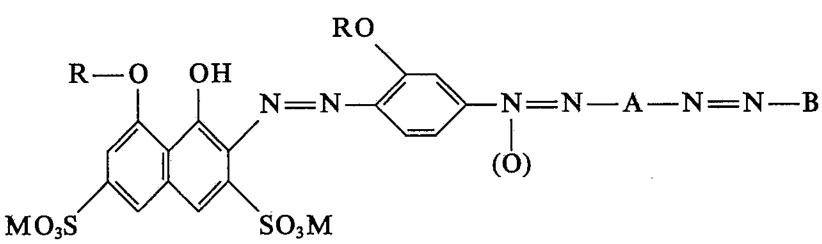

worin

R gegebenenfalls substituiertes $C_1-C_4$-Alkyl,
M Wasserstoff, ein Alkalimetall-Kation oder $HN(R_1)_3$-Kation; $R_1 = H$ oder gegebenenfalls substituiertes $C_1-C_4$-Alkyl, und
A und B einen gegebenenfalls substituierten Rest der Benzol- oder Naphthalinreihe bedeuten.

2. Farbstoffe der Formel

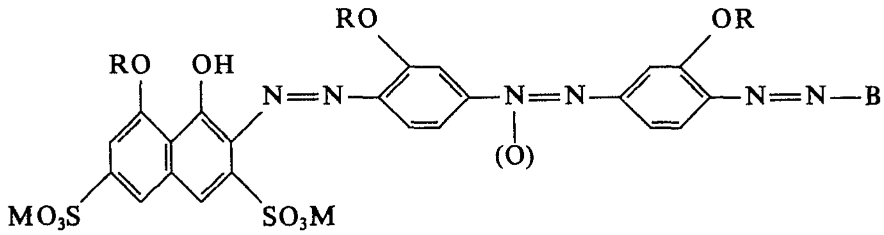

3. Farbstoffe des Anspruchs 2 mit B = Rest der Sulfonaphthalinreihe.

4. Farbstoffe der Formel

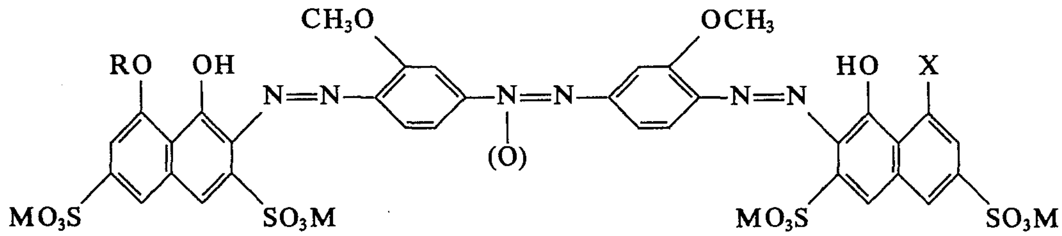

worin

X = Substituent insbesondere $C_1-C_4$-Alkoxy, Hydroxy, Amino, Acylamino.

5. Verwendung der Farbstoffe der Ansprüche 1–4 zum Färben von Cellulosematerialien insbesondere Papier und Leder.

## Claims

1. Tris-azo dyestuffs of the formula

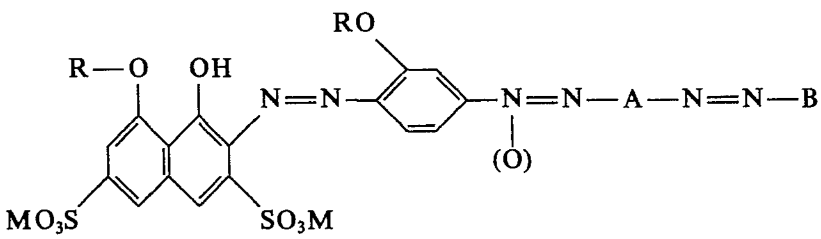

wherein

R denotes optionally substituted $C_1-C_4$-alkyl,

M denotes hydrogen, an alkali metal cation or a $HN(R_1)_3$ cation; $R_1 = H$ or optionally substituted $C_1-C_4$-alkyl, and

A and B denote an optionally substituted radical of the benzene or naphthalene series.

2. Dyestuffs of the formula

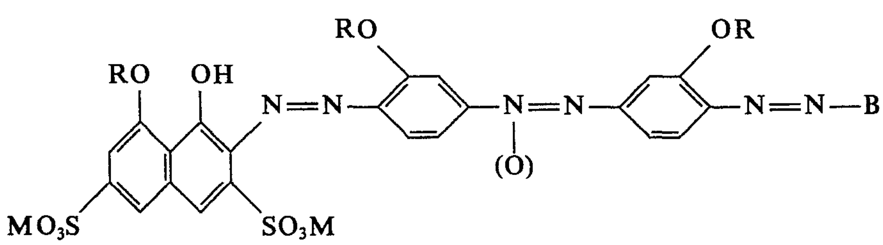

3. Dyestuffs of Claim 2, in which B = a radical of the sulphonaphthalene series.

4. Dyestuffs of the formula

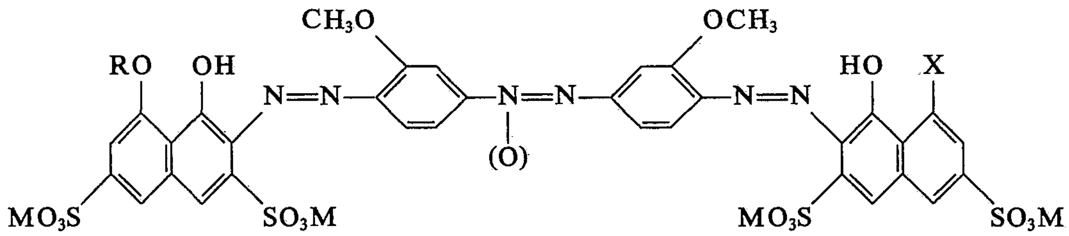

wherein

X= a substituent, in particular $C_1-C_4$-alkoxy, hydroxyl, amino or acylamino.

5. Use of the dyestuffs of Claims 1—4 for dyeing cellulose materials, in particular paper and leather.

**Revendications**

1. Colorants trisazoïques de formule

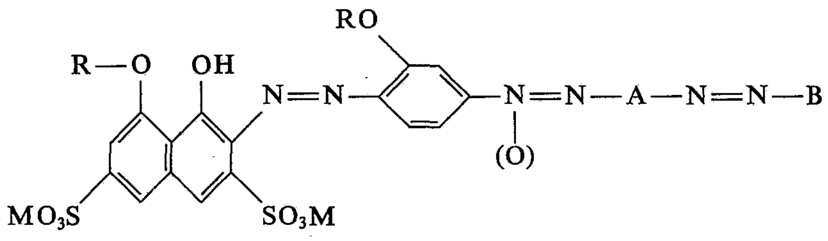

dans laquelle

R est un groupe alkyle en $C_1$ à $C_4$ éventuellement substitué,
M est l'hydrogène, un cation de métal alcalin ou un cation $HN(R_1)_3$; $R_1$=H ou un groupe alkyle en $C_1$ à $C_4$ éventuellement substitué, et
A et B désignent un reste éventuellement substitué de la série du benzène ou du naphtalène.

2. Colorants de formule

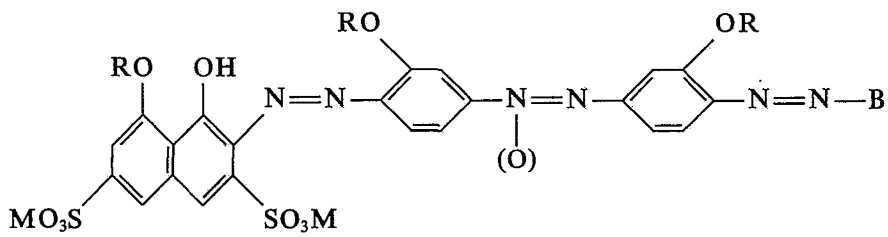

3. Colorants suivant la revendication 2, dans lesquels B est un reste de la série du sulfonaphtalène.

4. Colorants de formule

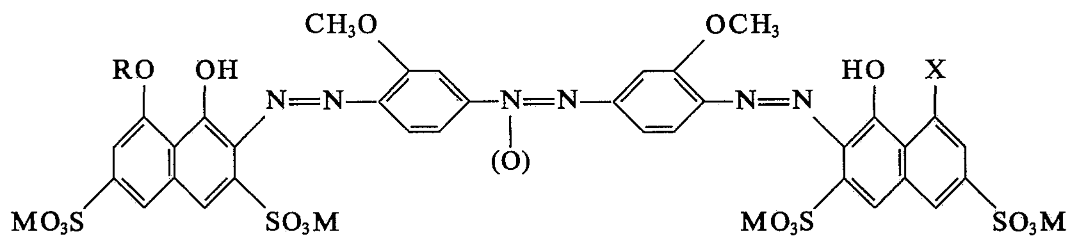

dans laquelle

X=substituant, notamment reste alkoxy en $C_1$ à $C_4$, hydroxy, amino, acylamino.

5. Utilisation des colorants suivant les revendications 1 à 4 pour la teinture de matière cellulosiques, notamment de papier et de cuir.